# EUROPÄISCHE PATENTSCHRIFT

(11) **EP 2 649 321 B1**
(45) Veröffentlichungstag und Bekanntmachung des Hinweises auf die Patenterteilung: **04.03.2015**
(21) Anmeldenummer: 12708715.3
(22) Anmeldetag: 19.01.2012
(51) Int. Cl.: F04D 17/12, F04D 25/02, F04D 25/16, F04D 29/42, F01D 15/12, F16H 57/02

(54) **GESTUFTE TEILFUGE AN EINEM GETRIEBEGEHÄUSE EINER FLUIDMASCHINE**
STEPPED SPLITTING LINE IN THE CASING OF THE GEARING OF A FLUID MACHINE
JOINT À DÉCROCHEMENT DANS LE CARTER D'ENGRENAGE D'UNE MACHINE FLUIDIQUE

(30) Priorität: 02.02.2011 DE 102011003525
(43) Veröffentlichungstag der Anmeldung: 16.10.2013
(73) Patentinhaber: Siemens Aktiengesellschaft, 80333 München (DE)
(72) Erfinder: SPANEL, Axel, 47228 Duisburg (DE); WEULE, Jan, 47269 Duisburg (DE)
(86) Internationale Anmeldenummer: PCT/EP2012/050806
(87) Internationale Veröffentlichungsnummer: WO 2012/104153

(56) Entgegenhaltungen:
- EP-A1- 0 440 902
- EP-A2- 2 128 448
- FR-A- 706 698
- US-A- 1 862 512

## Beschreibung

Die Erfindung betrifft ein teilbares Gehäuse einer Fluidmaschine für ein Getriebe wie beispielsweise ein teilbares Gehäuse eines Getriebeturboverdichters.

Verdichter bzw. fluidekomprimierende Vorrichtungen werden in verschiedenen Industriebereichen für verschiedene Anwendungen genutzt, bei denen es um eine Kompression oder Verdichtung von Fluiden, im Speziellen (Prozess-)Gasen, geht. Bekannte Beispiele hierfür sind Turboverdichter in mobilen industriellen Anwendungen, wie in Abgasturboladern oder in Strahltriebwerken, oder auch in stationären industriellen Anwendungen, wie Getriebe- bzw. Getriebeturboverdichter für eine Luftzerlegung.

Bei einem solchen - in seiner Arbeitsweise kontinuierlich arbeitenden - Turboverdichter wird die Druckerhöhung (Verdichtung) des Fluids dadurch bewirkt, dass ein Drehimpuls des Fluids von Eintritt zu Austritt durch ein rotierendes, radial erstreckende Schaufeln aufweisendes Laufrad des Turboverdichters durch die Rotation von den Schaufeln erhöht wird. Hier, d.h. in einer solchen Verdichterstufe, steigen Druck und Temperatur des Fluids, während die relative (Strömungs-)Geschwindigkeit des Fluids im Laufrad bzw. Turbolaufrad sinkt.

Um eine möglichst hohe Druckerhöhung bzw. Verdichtung des Fluids zu erreichen, können mehrere solcher Verdichterstufen hintereinander geschaltet werden.

Als Bauformen von Turboverdichtern unterscheidet man zwischen Radial- und Axialverdichtern.

Bei dem Axialverdichter strömt das zu komprimierende Fluid, beispielsweise ein Prozessgas, in paralleler Richtung zur Achse (Axialrichtung) durch den Verdichter. Bei dem Radialverdichter strömt das Gas axial in das Laufrad der Verdichterstufe und wird dann nach außen (radial, Radialrichtung) abgelenkt. Bei mehrstufigen Radialverdichtern wird damit hinter jeder Stufe eine Strömungsumlenkung notwendig.

Kombinierte Bauarten von Axial- und Radialverdichtern saugen mit ihren Axialstufen große Volumenströme an, die in den anschließenden Radialstufen auf hohe Drücke komprimiert werden.

Während meist einwellige Maschinen zum Einsatz kommen, sind bei (mehrstufigen) Getriebeturboverdichtern (kurz im Folgenden auch nur Getriebeverdichter) die einzelnen Verdichterstufen um ein Großrad herum gruppiert, wobei mehrere parallele (Ritzel-)Wellen, die jeweils ein oder zwei - in als Gehäuseanbauten realisierte Spiralgehäusen aufgenommene - Laufräder (an freien Wellenenden der Ritzelwellen angeordnete Turbolaufräder) tragen, von einem großen, im Gehäuse gelagerten Antriebszahnrad, einem Großrad, angetrieben werden.

Ein solcher Getriebeverdichter ist als ein Getriebeverdichter der Firma Siemens mit der Bezeichnung STC-GC, eingesetzt für die Luftzerlegung, bekannt und ebenfalls aus der EP 1 067 291 A1 bekannt.

Bei einem Getriebeverdichter erfolgen der Antrieb und damit eine Leistungsübertragung vom Großrad auf die Wellen bzw. Ritzelwellen durch ineinandergreifende bzw. -kämmende Verzahnungen bei Großrad und Ritzelwelle. Über unterschiedliche Zähnezahlen der Verzahnungen bzw. unterschiedliche Teilkreisdurchmesser werden gewünschte Übersetzungen bzw. Übersetzungsverhältnisse (Leistungsstufen) in den einzelnen Getriebestufen realisiert. D.h., die einzelnen Ritzelwellen sind in Verzahnungsgeometrie und Ritzelwellenmittenposition (Mittelpunkt bzw. Drehachse einer Ritzelwelle) zum Großrad hin und untereinander gekoppelt.

Bei Anordnung von mehreren Ritzelwellen um das Großrad muss ein Kompromiss aus idealen und realisierbaren Übersetzungsverhältnissen gefunden werden. Eine maßgeblich bestimmende und limitierende Größe ist dabei der zur Verfügung stehende und/oder realisierbare Bauraum, insbesondere der den außerhalb des Gehäuses - als Gehäuseanbauten - an den Ritzelwellenenden angeordneten, strömungsführenden Bauteilen (Spiralgehäusen) zur Verfügung stehende Platz.

Der Kopplung der Ritzelwellen mit dem Großrad über Verzahnungsgeometrie und Ritzelwellenmittenposition kommt bei Entwicklung und Auslegung sowie Konstruktion und Bau von Getriebeturbomaschinen damit eine zentrale Bedeutung zu. Auf Grund der Größenverhältnisse bzw. Größenunterschiede, d.h. auf Grund des sehr viel größeren Großrades im Vergleich zu den dazu vielfach kleineren, um das Großrad anzuordnenden Ritzelwellen, stellt sich insbesondere die Frage nach der Lage der Ritzelwellen bzw. deren Ritzelwellenmittenpositionen.

In üblicher Anordnung liegen zwei Ritzelwellen in einer ersten, ungeteilten und waagrechten Teilfuge mit dem Großrad. Eine dritte Ritzelwelle ist oberhalb des Großrads in einer zweiten, ungeteilten und waagrechten Teilfuge angeordnet.

Es ergeben sich bei dieser Anordnung sechs freie Wellenenden an den insgesamt drei Ritzelwellen, welche - mit Turbolaufrädern bestückt - eine mehrstufige Getriebeturbomaschine mit sechs möglichen Prozessstufen realisierbar machen.

Um eine Verdichtungsleistung eines solchen sechsstufigen Getriebeverdichters zu erhöhen, ist es bekannt, die Anzahl der Prozessstufen, beispielsweise durch eine vierte Ritzelwelle, zu erhöhen.

Dabei wird gefordert, diese vierte Ritzelwelle wirtschaftlich und mit überschaubarem konstruktivem und montagetechnischem Aufwand im Gehäuse des Getriebeverdichters unterzubringen. Zwei Ansatzweisen für die Anordnung einer solchen vierten Ritzelwelle sind bekannt:
a) Anordnung der vierten Ritzelwelle oberhalb des Großrads zusammen mit der dritten Ritzelwelle in der zweiten, ungeteilten und waagrechten zweiten Teilfuge .

Eine Konstruktion mit zwei Teilfugen zeigt beispielsweise die EP 0 440 902 A1

Bei Anordnung der vierten Ritzelwelle oberhalb des Großrads muss der zur Verfügung stehende Bauraum mit der dritten Ritzelwelle geteilt werden. Für die Anordnung der dritten und der vierten Ritzelwelle in der Teilfuge sind Kollisionen von außen angeordneten, strömungsführenden Bauteilen (Spiralgehäuse) maßgeblich. Um Schnittstellen zu angrenzenden Funktionen (Lageraufnahme, Spiralanbindung) definieren zu können, wird die Teilfuge ungeteilt und waagrecht ausgeführt.

Um bei solcher Anordnung verschiedene Übersetzungen in den Getriebestufen zu realisieren, ist es bekannt, ein mehrfach verzahntes Großrad, beispielsweise als integrierte Einheit mit einem zweiten Großrad, einzusetzen. D. h., ein solches mehrfach verzahntes Großrad weist (axial) versetzte Verzahnungen auf, die jeweils mit unterschiedlichen Ritzelwellen kämmen.

Dadurch werden zwar eine Vielzahl zusätzlicher Übersetzungsverhältnisse und daran gekoppelte Ritzelwellenmittenpositionen möglich, jedoch ist dies mit einem hohen Fertigungs- und Kostenaufwand verbunden.
b) Anordnung der vierten Ritzelwelle unterhalb des Großrads in Ausführung als Steckritzelwelle.

Bei Anordnung der vierten Ritzelwelle unterhalb des Großrads muss der Bauraum nicht mit einer benachbarten Ritzelwelle geteilt werden, allerdings ist dort keine Teilfuge vorhanden, die zur Montage genutzt werden kann.

Die Montage der vierten Ritzelwelle ist nur durch seitliches Einschieben (Stecken) möglich (Steckritzelwelle).

Dadurch können die Ritzelwellenmittenpositionen unter Berücksichtigung der Spiralgehäuse der ersten Teilfuge nahezu frei gewählt werden. Aber auch hier ist die Realisierung mit erheblichem Mehraufwand (Montageteile, Montagevorgang) verbunden.

Das Getriebegehäuse einer Fluidmaschine mit einem Großrad, zwei Ritzelwellen, und einer gestuften Teilfuge offenbart die US 1 862 512 A1. Die Ritzelwellen befinden sich hier auf gleicher Höhe.

Somit liegt der Erfindung die Aufgabe zugrunde, ein Gehäuse für ein Getriebe einer Fluidmaschine, insbesondere für ein Getriebe eines Getriebeverdichters, anzugeben, welches die Nachteile aus dem Stand der Technik verbessert, insbesondere unterschiedliche Übersetzungsverhältnisse des Getriebes bei geringem Fertigungs- und Kostenaufwand ermöglicht, bauraumoptimiert, einfach und kostengünstig zu realisieren und auch einfach und kostengünstig zu montieren ist.

Die Aufgabe wird durch ein teilbares Gehäuse einer Fluidmaschine für ein in dem teilbaren Gehäuse aufnehmbares bzw. aufzunehmendes Getriebe mit den Merkmalen gemäß dem unabhängigen Patentanspruch gelöst.

Das teilbare Gehäuse der Fluidmaschine umfasst zumindest ein erstes Gehäuseelement und ein mit dem ersten Gehäuseelement über eine Teilfuge verbundenes, zweites Gehäuseelement, beispielsweise einen (Gehäuse-)Oberkasten sowie einen (Gehäuse-)Deckel.

Das für die Aufnahme in dem teilbaren Gehäuse vorzusehende Getriebe weist ein Großrad und zumindest zwei mit dem Großrad im Eingriff stehende Ritzelwellen auf. Im Eingriff stehen kann hierbei heißen, dass das Großrad und die Ritzelwellen ineinandergreifende bzw. ineinanderkämmende Verzahnungen aufweisen. Beispielsweise kann die Verzahnung als Gerad- oder Schräg- oder Bogenverzahnung ausgeführt sein.

Erfindungsgemäß ist die Teilfuge derart ausgebildet, dass die mindestens zwei Ritzelwellen in der Teilfuge, beispielsweise in dort anzuordnenden Lageraufnahmen bzw. Lagerschalen, aufnehmbar sind. Weiter erfindungsgemäß weist die Teilfuge einen Teilfugensprung auf, wobei die mindestens zwei Ritzelwellen in der Teilfuge beiderseits des Teilfugensprungs aufnehmbar sind.

Unter einem Teilfugensprung ist dabei zu verstehen, dass die Teilfuge - beiderseits einer den Teilfugensprung ausbildenden Übergangsstelle - zwei unterschiedliche horizontale Niveaus ausbildet. Der dadurch realisierbare Höhenunterschied innerhalb der Teilfuge kann in weiten Bereichen beliebig sein, beispielsweise 10 mm bis 1000 mm oder 20 mm bis 500 mm, bevorzugt 30 mm bis 100 mm, insbesondere 60 mm. Eine Begrenzung erfolgt allenfalls durch die Größe des Großrades, die Größe der Ritzelwellen und/oder durch sich dadurch möglicherweise ergebender Kollisionen bei Anbauteilen.

Bevorzugt können diese unterschiedlichen Niveaus in der Teilfuge bzw. kann dieser Teilfugensprung dadurch realisiert sein, dass das erste und das zweite Gehäuseelement jeweils eine einander entsprechende und den Teilfugensprung ausbildende Stufe - oder auch mehrere Stufen, beispielsweise ähnlich einer Treppe, - aufweisen.

Auch können die unterschiedlichen Niveaus bzw. kann der Teilfugensprung durch anders ausgebildete bzw. geformte Übergangstellen, wie geneigte, geradlinig an- oder absteigende und/oder gebogene bzw. gerundete Verläufe in den zwei sich entsprechenden Gehäuseelementen, realisiert werden.

Der erfindungsgemäße Teilfugensprung ermöglicht, dass in der Teilfuge zwei unterschiedliche horizontale Ebenen ausgebildet sind, welche für eine Lagerung der mindestens zwei, mit dem Großrad im Eingriff stehenden Ritzelwellen auf unterschiedlichen horizontalen Niveaus bzw. in unterschiedlichen horizontalen Ebenen in einer einzigen Teilfuge genutzt werden können.

Werden die mindestens zwei Ritzelwellen beiderseits des Teilfugensprungs bzw. der Übergangstelle, insbesondere der Stufe in der Teilfuge, im Eingriff mit dem Großrad angeordnet, so wird dadurch die Anordnung der mindestens zwei Ritzelwellen in einer einzigen Teilfuge bei gleichzeitig unterschiedlichen Ritzelwellenmittenpositionen ermöglicht. Die Teilkreise der mindestens zwei Ritzelwellen müssen nur noch den Teilkreis des Großrades berühren (, was auf Grund des Teilfugensprungs in beliebig unterschiedlicher Höhe erfolgen kann); die bisherige Forderung, nach der die Ritzelwellenmittelpunkte der mindestens zwei, mit dem Großrad im Eingriff stehenden Ritzelwellen in einer gleichen horizontalen Ebene liegen (ungeteilte und waagrechte Teilfuge), kann entfallen.

Die Aufnahme der mindestens zwei Ritzelwellen in einer einzigen Teilfuge ist aus Kosten- und Montagegründen vorteilhaft - und wird über den Teilfugensprung weiter genutzt; über die realisierbaren unterschiedlichen Ritzelwellenmittenpositionen lassen sich - auf Grund der dadurch erweiterten Bauraummöglichkeiten - unterschiedliche Übersetzungsverhältnisse (Variabilität der Übersetzungen) - beispielsweise ohne Aufwand einer Mehrfachverzahnung am Großrad - im Getriebe realisieren. Vereinfacht ausgedrückt, die Erfindung ermöglicht einen zusätzlichen (Gestaltungs-)Freiheitsgrad bei der Ausgestaltung, welcher für die Realisierung von unterschiedlichen Übersetzungsverhältnissen genutzt werden kann.

Bevorzugte Weiterbildungen der Erfindung ergeben sich aus den abhängigen Ansprüchen.

In einer bevorzugten Weiterbildung weist das erste und das zweite Gehäuseelement jeweils eine zueinander entsprechende und den Teilfugensprung ausbildende Stufe auf. Derartige Stufen in den Gehäuseelementen, beispielsweise durch entsprechende Gussverfahren bei Stahl eingegossen und/oder bei Stahlteilen (nach-)bearbeitet, können beliebige Stufenhöhen aufweisen, welche nur von einer Größe des Großrades, Größen der mindestens zwei Ritzelwellen und/oder einer Größe des teilbaren Gehäuses selbst begrenzt werden.

In einer weiteren bevorzugten Ausgestaltung ist das Getriebe in dem teilbaren Gehäuse aufgenommen, wobei die mindestens zwei Ritzelwellen in der Teilfuge beiderseits des Teilfugensprungs bzw. der Übergangsstelle, insbesondere beiderseits einer den Teilfugensprung ausbildenden Stufe, aufgenommen sind, beispielsweise in Lageraufnahmen oder Lagerschalen. Um im Eingriff mit dem Großrad zu stehen, berühren die Teilkreise der beiden Ritzelwellen den Teilkreis des Großrades - allerdings in unterschiedlicher horizontaler Höhe, d.h. die Ritzelwellenmittenpositionen liegen in unterschiedlichen horizontalen Ebenen.

Dabei kann bevorzugt weiterbildend vorgesehen werden, dass zumindest eine (Dreh-)Achse der beiden (Dreh-)Achsen der zumindest zwei Ritzelwellen oberhalb einer (Dreh-)Achse des Großrades in dem teilbaren Gehäuse angeordnet ist. Besonders bevorzugt kann auch vorgesehen sein, dass beide (Dreh-)Achsen der mindestens zwei Ritzelwellen oberhalb der (Dreh-)Achse des Großrades (101) angeordnet sind. Dadurch steht mehr Bauraum unterhalb der (Dreh-)Achse des Großrades in dem teilbaren Gehäuse zu Verfügung, beispielsweise für weitere, mit dem Großrad - oder einem weiteren, insbesondere mit dem vorgenanntem Großrad gekoppelten bzw. im Eingriff stehenden Großrad - im Eingriff stehenden Ritzelwellen.

Nach einer bevorzugten Weiterbildung sind das erste und das zweite Gehäuseelement miteinander verstiftet (Zentrierung) und/oder miteinander verschraubt. Auch können die Gehäuseelemente aus Metall, insbesondere Stahl, sein.

Weiter kann bevorzugt vorgesehen sein, dass das teilbare Gehäuse ein drittes Gehäuseelement aufweist, welches mit dem ersten Gehäuseelement oder mit dem zweiten Gehäuseelement über eine weitere Teilfuge verbunden ist. So kann beispielsweise das erste Gehäuseelement ein Oberkasten, das zweite Gehäuseelement ein Deckel und das dritte Gehäuseelement ein Unterkasten des teilbaren Gehäuses sein.

Auch kann vorgesehen sein, dass weitere Gehäuseanbauten an das teilbare Gehäuse montiert sind, beispielsweise außen angeordnete strömungsführende Bauteile, wie Spiralgehäuse, und/oder Spiralanbindungen und/oder Lageraufnahmen.

In einer weiteren bevorzugten Ausgestaltung weist das Getriebe mindestens zwei weitere, mit dem Großrad oder einem weiteren Großrad im Eingriff stehende Ritzelwellen auf. Besonders bevorzugt kann hier vorgesehen sein, dass das Großrad oder das weitere Großrad und die mindestens zwei weiteren Ritzelwellen in der weiteren Teilfuge angeordnet sind.

Ferner kann vorgesehen sein, dass das erste und das zweite Gehäuseelement ein Oberkasten und ein Teilfugendeckel des Getriebegehäuses sind und/oder dass das erste und das zweite Gehäuseelement über vertikal zueinander versetzte Stufenflächen einer den Teilfugensprung ausbildenden Stufe gegeneinander ausgerichtet und/oder zentriert sind.

Bei einer bevorzugten Weiterbildung ist vorgesehen, dass die Teilfuge unter Verwendung einer Dichtlinse, insbesondere einer über den Teilfugensprung angeordneten, insbesondere von außen (an-)geschraubten und/oder am Teilfugensprung versenkt angeordneten Dichtlinse, abgedichtet ist.

Hierbei kann weiter vorgesehen sein, dass die Dichtlinse mindestens einen O-Ring, insbesondere einen radial und/oder axial wirkenden O-Ring, aufweist.

Für einen effizienten und langlebigen Betrieb des in dem teilbaren Gehäuse aufzunehmenden Getriebes ist die Abdichtung, insbesondere eine Ölabdichtung beispielsweise im Falle einer im dem Gehäuse realisierten Ölsumpfschmierung, der Teilfuge von großer Bedeutung.

Die hierzu vorsehbare, von außen über die Teilfugenstufe versenkt geschraubte, mit einem eingesetzten O-Ring ausgestattete Dichtlinse erzielt auf einfache und kostengünstige Weise eine effiziente Dichtwirkung.

Die Herstellung des Dichtlinsensitzes am Getriebegehäuse bzw. Teilfugensprung erfolgt bevorzugt beim Ausspindeln der Lagersitze und macht keinen weiteren Bearbeitungsschritt notwendig. Durch die versenkte Anordnung der Dichtlinse stellt diese kein Hindernis für angrenzende Bauteile dar; eine Vorrichtung zur Spiraleinstellung bleibt montierbar.

Um die Dichtwirkung der Dichtlinse weiter zu erhöhen, kann eine oder mehrere zusätzliche, axial wirkende O-Ringe eingesetzt werden. Diese haben darüber hinaus den Vorteil, dass die Dichtrichtung entgegen der Klemmkraft der Teilverschraubung wirkt.

Auch bleiben, unabhängig von der O-Ringanordnung in der Dichtlinse, Ausführung und Montage der Teilfugenverschraubung unberührt.

Gemäß einer bevorzugten Weiterbildung ist das Getriebe ein Getriebe einer Fluid- bzw. Strömungsmaschine, beispielweise einer Turbine, eines Turboverdichters, eines mehrstufigen Getriebekompressors oder einer Pumpe.

In einer besonders bevorzugten Weiterbildung ist das teilbare Gehäuse Teil einer mehrstufigen Getriebeverdichteranlage, welche acht Stufen (vier Ritzelwellen) mit radialen Laufrädern und Spiralgehäusen aufweist. Die Abdichtung der Kompressorstufen zum teilbaren (Getriebe-)Gehäuse kann durch Kohlerringe erfolgen. Als Antrieb kann ein Elektromotor dienen. Das teilbare Gehäuse weist einen Unterkasten, einen Oberkasten sowie einen Deckel auf. Der Unterkasten und der Oberkasten sind über eine ungeteilte und waagrechte Teilfuge verbunden. Der Oberkasten und der Deckel sind über eine gestufte Teilfuge verbunden. Sowohl in der gestuften, ersten Teilfuge als auch in der ungeteilten und waagrechten zweiten Teilfuge sind jeweils zwei Ritzelwellen, welche an den freien Wellenenden mit Turbolaufrädern bestückt sind, angeordnet. In der ungeteilten und waagrechten zweiten Teilfuge und zwischen den beiden dort angeordneten Ritzelwellen ist darüber hinaus auch die Welle des Großrades angeordnet.

In Figuren ist ein Ausführungsbeispiel der Erfindung dargestellt, welche im Weiteren näher erläutert werden.

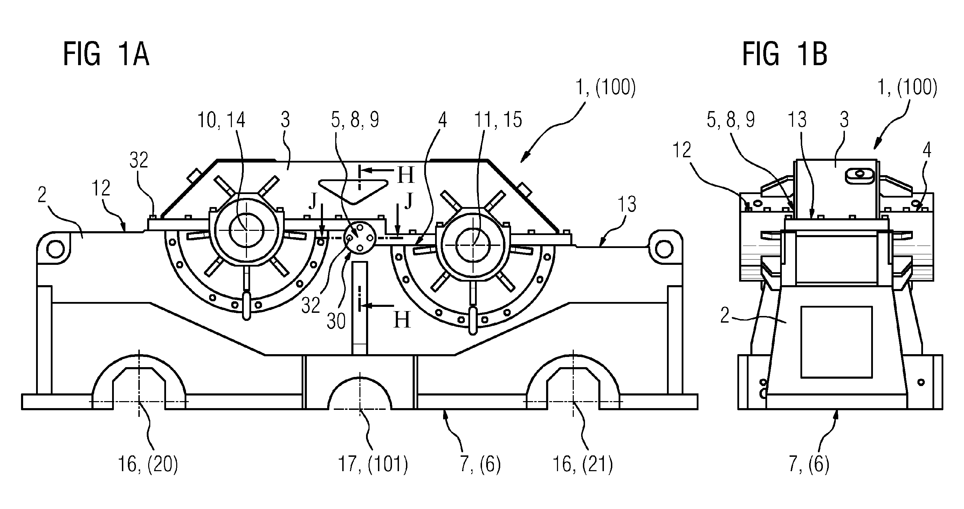

Es zeigen
- FIG 1A, FIG 1B: zwei Ansichten eines einen Deckel und einen Oberkasten aufweisenden geteilten Gehäuses für ein Getriebe eines mehrstufigen Getriebeverdichters;
- FIG 2: Ansicht eines Schnitts entlang einer mit H-H benannten Schnittlinie in FIG 1A;
- FIG 3: Ansicht eines Schnitts entlang einer mit J-J benannten Schnittlinie in FIG 1A;

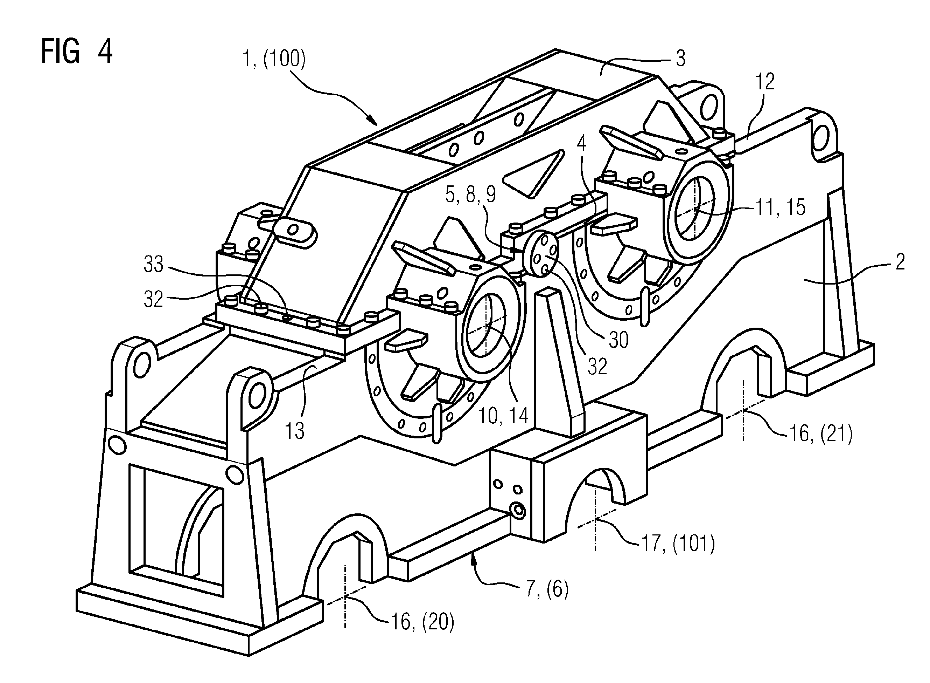

- FIG 4: räumliche Darstellung des geteilten Gehäuses für ein Getriebe eines mehrstufigen Getriebeverdichters nach den FIGen 1A, 1B.

Ausführungsbeispiel: Gestufte Teilfuge an einem geteilten Getriebegehäuse für ein Getriebe eines mehrstufigen Getriebeverdichters

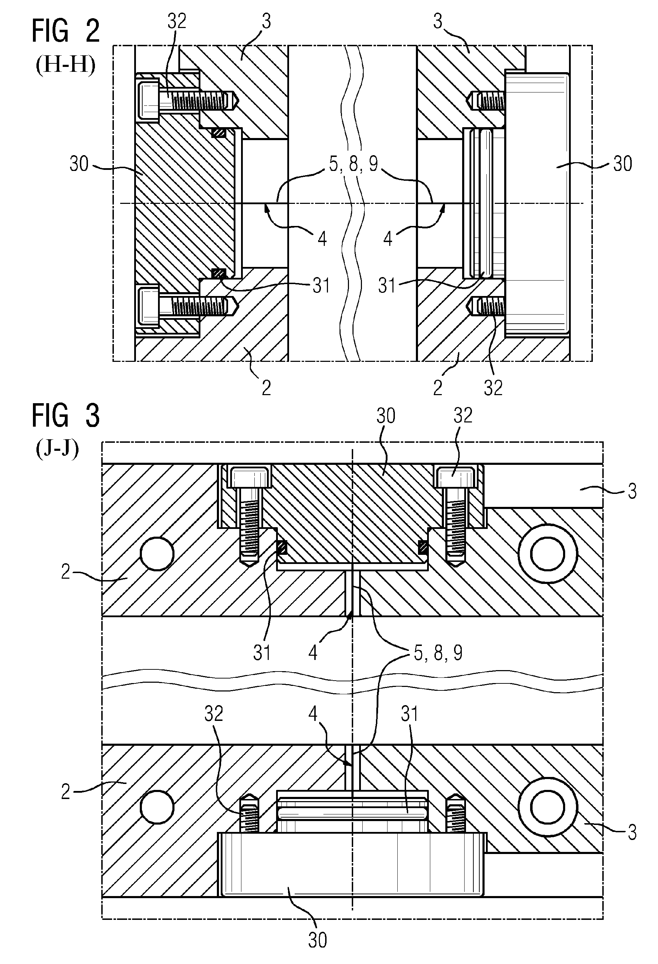

FIGen 1A, 1B (Front- und Seitenansicht) sowie FIG 3 (3D - Ansicht) zeigen Ansichten - einen Oberkasten 2 und einen Deckel 3 - eines geteilten Gehäuses 1 (Getriebegehäuse) für ein Getriebe 100 eines mehrstufigen Getriebeverdichters, welche für eine Luftzerlegung vorgesehen ist.

Das geteilte Gehäuse 1 weist den dargestellten Deckel 3 und den dargestellten Oberkasten 2 sowie einen (nicht dargestellten) Unterkasten 6 - alle vorzugsweise aus Stahl - auf. Der Deckel 3 und der Oberkasten 2 sind über eine erste, gestufte Teilfuge 4 miteinander verbunden; der Oberkasten 2 und der Unterkasten 6 sind über eine zweite, waagrechte und ungestufte Teilfuge 7 miteinander verbunden.

Der mehrstufige Getriebeverdichter besteht aus acht (Verdichter-)Stufen, welche über ein im geteilten Gehäuse 1 aufgenommenes Getriebe 100 mit vier mit einem Großrad 101 des Getriebes 100 im Eingriff stehenden Ritzelwellen 10, 11, 20, 21 des Getriebes 101 realisiert sind. An den freien Enden der vier Ritzelwellen 10, 11, 20, 21 sind Turbolaufräder angeordnet, welche in - bezüglich des Getriebegehäuses 1 - außen angeordneten Spiralgehäusen (strömungsführende Bauteile) aufgenommen sind.

Alle vier Ritzelwellen 10, 11, 20, 21 sind um das Großrad 101 angeordnet und stehen über Verzahnungen mit dem Großrad 101 im Eingriff. Dabei sind die erste 10 und die zweite Ritzelwelle 11 (Stufe 5 bis 8) oberhalb des Großrades 101 angeordnet; die dritte 20 und die vierte Ritzelwelle 21 (Stufe 1 bis 4) sind auf Höhe des Großrades 101 angeordnet. Um einen effiziente Eingriff der Ritzelwellen 10, 11, 20, 21 zu ermöglichen, sind die Ritzelwellen 10, 11, 20, 21 - bezüglich ihres Abstandes zum Großrad 101 - derart angeordnet, dass die Teilkreise der Ritzelwellen 10, 11, 20, 21 jeweils den Teilkreis des Großrades 101 berühren.

Der Antrieb des Großrades 101 bzw. der Welle des Großrades 101 erfolgt über einen Elektromotor. Die Abdichtung der Kompressorstufen zum Getriebegehäuse 1 erfolgt durch Kohlerringe.

Wie die FIGen 1A, 1B sowie FIG 3 zeigen weist der Oberkasten 2 an seiner - zusammen mit der Oberseite des Unterkastens 6 die zweite, ungestufte und waagrechte Teilfuge 7 ausbildenden - Unterseite die Aufnahmen, d.h. die Wellensitze, für die Welle des Großrades 101 sowie die dritte 20 und die vierte Ritzewelle 21 auf. Alle drei Wellen 20, 21, (101) liegen dabei in einer horizontalen, waagrechten Ebene - gemäß der zweiten, ungestuften und waagrechten Teilfuge 7.

Wie weiter die FIGen 1A, 1B sowie FIG 3 zeigen weist der Oberkasten 2 an seiner - zusammen mit der Unterseite des Deckels 3 die erste, gestufte Teilfuge 4 ausbildenden - Oberseite die Aufnahmen, d.h. die Wellensitze, für die erste 10 und die zweite Ritzewelle 11 auf. Die entsprechenden Aufnahmen für die erste 10 und die zweite Ritzelwelle 11 sind auch in der Unterseite des Deckels 3 vorgesehen.

Die erste, gestufte Teilfuge 4 weist eine - bezüglich der Längserstreckung des Gehäuses 1 etwa in der Mitte des Gehäuses 1 angeordnete - Sprungstelle 5 mit etwa einer Höhe von ca. 60 mm auf. Diese Sprungstelle 5 wird durch entsprechende Stufen 8 sowohl im Oberkasten 2 des Gehäuses 1 - wie auch entsprechend im Deckel 3 des Gehäuses 1 - gebildet.

Dadurch liegen die erste 10 und die zweite Ritzelwelle 11 zwar oberhalb des Großrades 101 und gemeinsam in der ersten, gestuften Teilfuge 4, was aus Montage- und Kostengründen günstig ist. Allerdings liegen die erste 10 und die zweite Ritzelwelle 11 nicht mehr in der gleichen horizontalen Ebene, sondern - entsprechend der ausgebildeten Stufe 8 - in unterschiedlichen horizontalen Ebenen 12, 13 bzw. Höhen. Nur mehr die Teilkreise von erster 10 und zweiten Ritzelwelle 11 und Großrad 101 berühren sich.

Um eine Ausrichtung von Oberkasten 2 und Deckel 3 zu ermöglichen, sind die vertikalen Stufenflächen 9 zueinander versetzt. Der Oberkasten 2 und Deckel 3 sind durch Zentrierstifte verstiftet 33 und verschraubt 32. Auch der Unterkasten und der Oberkasten sind verstiftet 33 und verschraubt 32.

- Abdichtung der gestuften Teilfuge 4 durch eine Dichtlinse 30 mit O-Ring 31

Die Schmierung des im Gehäuse 1 angeordneten Getriebes 100 erfolgt durch eine Ölsumpfschmierung, wobei die Ölabdichtung der ersten, gestuften Teilfuge 4, insbesondere des dortigen Teilfugensprungs 5 bzw. der Stufen 6 im Oberkasten 2 und dem Deckel 3, ein zentrale Bedeutung einnimmt.

Hierfür sieht, wie die FIGen 2 und 3 im Detail bzw. in Schnitten (H-H, J-J) zeigen, das Getriebegehäuse 1 den Einsatz einer Dichtlinse 30 vor.

Diese Dichtlinse 30 wird von außen über die Teilfugenstufe 5 versenkt geschraubt 32. Die Dichtwirkung wird über einen eingesetzten O-Ring 31 erzielt.

Die Herstellung des versenkten Linsensitzes am Getriebegehäuse 1 erfolgt beim Ausspindeln der Lagersitze der ersten 10 und zweiten Ritzelwelle 11 und macht keinen weiteren Bearbeitungsschritt notwendig.

Durch die versenkte Anordnung der Dichtlinse 30 stellt diese kein Hindernis für angrenzende Bauteile dar; die Vorrichtung zur Spiraleinstellung bleibt montierbar.

Unabhängig von der O-Ringanordnung 31 in der Dichtlinse 30 bleiben Ausführung und Montage der Teilfugenverschraubung 32 unberührt.

## Patentansprüche

1. Teilbares Gehäuse (1) einer Fluidmaschine für ein in dem teilbaren Gehäuse (1) aufnehmbares Getriebe (100) mit einem Großrad (101) und mit mindestens zwei mit dem Großrad (101) im Eingriff stehenden Ritzelwellen (10, 11), wobei das teilbare Gehäuse (1) zumindest ein erstes Gehäuseelement (2) und ein mit dem ersten Gehäuseelement (2) über eine Teilfuge (4) verbundenes, zweites Gehäuseelement (3) aufweist und die mindestens zwei Ritzelwellen (10, 11) in der Teilfuge (4) aufnehmbar sind,
**dadurch gekennzeichnet, dass**
die Teilfuge (4) einen Teilfugensprung (5) aufweist, welcher zwei unterschiedliche horizontale Niveaus in der Teilfuge (4) ausbildet, wobei die mindestens zwei Ritzelwellen (10, 11) in der Teilfuge (4) beiderseits des Teilfugensprungs in den zwei unterschiedlichen horizontalen Niveaus aufnehmbar sind.

2. Teilbares Gehäuse (1) einer Fluidmaschine nach mindestens einem der voranstehenden Ansprüche,
**dadurch gekennzeichnet, dass**
das erste (2) und das zweite Gehäuseelement (3) jeweils eine zueinander entsprechende und den Teilfugensprung (5) ausbildende Stufe (8) aufweisen.

3. Teilbares Gehäuse (1) einer Fluidmaschine nach mindestens einem der voranstehenden Ansprüche,
**dadurch gekennzeichnet, dass**
das Getriebe (100) in dem teilbaren Gehäuse (1) aufgenommen ist, wobei die mindestens zwei Ritzelwellen (10, 11) in der Teilfuge (4) beiderseits des Teilfugensprungs (5) aufgenommen sind.

4. Teilbares Gehäuse (1) einer Fluidmaschine nach dem voranstehenden Anspruch,
**dadurch gekennzeichnet, dass**
zumindest eine (Dreh-)Achse (14, 15) der beiden (Dreh-)Achsen (14, 15) der zumindest zwei Ritzelwellen (10, 11) oberhalb einer (Dreh-)Achse (17) des Großrades (101) in dem teilbaren Gehäuse (1) angeordnet ist.

5. Teilbares Gehäuse (1) einer Fluidmaschine nach mindestens einem der voranstehenden Ansprüche,
**dadurch gekennzeichnet, dass**
das erste (2) und das zweite Gehäuseelement (3) miteinander verstiftet und/oder miteinander verschraubt sind.

6. Teilbares Gehäuse (1) einer Fluidmaschine nach mindestens einem der voranstehenden Ansprüche,
**dadurch gekennzeichnet, dass**
das teilbare Gehäuse (1) ein drittes Gehäuseelement (6) aufweist, welches mit dem ersten Gehäuseelement (2) oder mit dem zweiten Gehäuseelement (3) über eine weitere Teilfuge (7) verbunden ist.

7. Teilbares Gehäuse (1) einer Fluidmaschine nach dem voranstehenden Anspruch,
**dadurch gekennzeichnet, dass**
das Getriebe (100) mindestens zwei weitere, mit dem Großrad (101) oder einem weiteren Großrad im Eingriff stehende Ritzelwellen (20, 21) aufweist, wobei das Großrad (101) oder das weitere Großrad und die mindestens zwei weiteren Ritzelwellen (20, 21) in der weiteren Teilfuge (7) angeordnet sind.

8. Teilbares Gehäuse (1) einer Fluidmaschine nach mindestens einem der voranstehenden Ansprüche,
**dadurch gekennzeichnet, dass**
das erste (2) und das zweite Gehäuseelement (3) ein Oberkasten und ein Teilfugendeckel des Getriebegehäuses (1) sind und/oder dass das erste (2) und das zweite Gehäuseelement (3) über vertikal zueinander versetzte Stufenflächen (9) einer den Teilfugensprung (5) ausbildenden Stufe (8) gegeneinander ausgerichtet und/oder zentriert sind.

9. Teilbares Gehäuse (1) einer Fluidmaschine nach mindestens einem der voranstehenden Ansprüche,
**dadurch gekennzeichnet, dass**
die Teilfuge (4) unter Verwendung einer über den Teilfugensprung (5) angeordneten Dichtlinse (30) abgedichtet ist.

10. Teilbares Gehäuse (1) einer Fluidmaschine nach mindestens einem der voranstehenden Ansprüche,
**dadurch gekennzeichnet, dass**
das Getriebe (100) ein Getriebe (100) einer Turbine, eines Turboverdichters, eines mehrstufiger Getriebekompressors oder einer Pumpe ist.

## Claims

1. Divisible housing (1) of a fluid machine for a transmission (100) receivable in the divisible housing (1) and having a large wheel (101) and at least two pinion shafts (10, 11) which are in engagement with the large wheel (101), the divisible housing (1) having at least one first housing element (2) and one second housing element (3) connected to the first housing element (2) via a parting joint (4), and the at least two pinion shafts (10, 11) being receivable in the parting joint (4), **characterized in that** the parting joint (4) has a parting joint jump (5), which forms two different horizontal levels in the parting joint (4), the at least two pinion shafts (10, 11) being receivable in the parting joint (4) on both sides of the parting joint jump at the two different horizontal levels.

2. Divisible housing (1) of a fluid machine according to Claim 1, **characterized in that** the first housing element (2) and the second housing element (3) have in each case a step (8) corresponding to one another and forming the parting joint jump (5).

3. Divisible housing (1) of a fluid machine according to at least one of the preceding claims, **characterized in that** the transmission (100) is received in the divisible housing (1), the at least two pinion shafts (10, 11) being received in the parting joint (4) on both sides of the parting joint jump (5).

4. Divisible housing (1) of a fluid machine according to the preceding claim, **characterized in that** at least one axis (of rotation) (14, 15) of the two axes (of rotation) (14, 15) of the at least two pinion shafts (10, 11) is arranged above an axis (of rotation) (17) of the large wheel (101) in the divisible housing (1).

5. Divisible housing (1) of a fluid machine according to at least one of the preceding claims, **characterized in that** the first housing element (2) and the second housing element (3) are pinned to one another and/or screwed to one another.

6. Divisible housing (1) of a fluid machine according to at least one of the preceding claims, **characterized in that** the divisible housing (1) has a third housing element (6) which is connected to the first housing element (2) or to the second housing element (3) via a further parting joint (7).

7. Divisible housing (1) of a fluid machine according to the preceding claim, **characterized in that** the transmission (100) has at least two further pinion shafts (20, 21) which are in engagement with the large wheel (101) or with a further large wheel, the large wheel (101) or the further large wheel and the at least two further pinion shafts (20, 21) being arranged in the further parting joint (7).

8. Divisible housing (1) of a fluid machine according to at least one of the preceding claims, **characterized in that** the first housing element (2) and the second housing element (3) are a top box and a parting joint cover of the transmission housing (1), and/or **in that** the first housing element (2) and the second housing element (3) are aligned and/or centered with one another via step faces (9), offset vertically to one another, of a step (B) forming the parting joint jump (5).

9. Divisible housing (1) of a fluid machine according to at least one of the preceding claims, **characterized in that** the parting joint (4) is sealed off, using a sealing lens (30) arranged over the parting joint jump (5).

10. Divisible housing (1) of a fluid machine according to at least one of the preceding claims, **characterized in that** the transmission (100) is a transmission (100) of a turbine, turbocompressor, multistage transmission compressor or

## Revendications

1. Carter ( 1 ) divisible pour un engrenage ( 100 ) qui peut être logé dans le carter ( 1 ) divisible et qui a une grande roue ( 101 ) et au moins deux arbres ( 10, 11 ) de pignon engrenant avec la grande roue ( 101 ), le carter ( 1 ) divisible ayant au moins un premier élément ( 2 ) de carter et un deuxième élément ( 3 ) de carter relié au premier élément ( 2 ) de carter par un joint ( 4 ) partiel, et les au moins deux arbres ( 10, 11 ) de pignon peuvent être logés dans le joint ( 4 ) partiel,
**caractérisé en ce que**
le joint ( 4 ) partiel a un saut ( 5 ), qui forme deux niveaux horizontaux différents dans le joint ( 4 ) partiel, les au moins deux arbres ( 10, 11 ) de pignon pouvant être reçus dans le joint ( 4 ) partiel, de part et d'autre du saut, dans les deux niveaux horizontaux différents.

2. Carter ( 1 ) divisible d'une machine fluidique suivant au moins l'une des revendications précédentes,
**caractérisé en ce que**
le premier ( 2 ) et le deuxième éléments ( 3 ) de carter ont respectivement un gradin ( 8 ) se correspondant l'un à l'autre et formant le saut ( 5 ) du joint partiel.

3. Carter ( 1 ) divisible d'une machine fluidique suivant au moins l'une des revendications précédentes,
**caractérisé en ce que**
l'engrenage ( 100 ) est logé dans le carter ( 1 ) divisible, les au moins deux arbres ( 10, 11 ) de pignon étant logés dans le joint ( 4 ) partiel, de part et d'autre du saut ( 5 ) du joint partiel.

4. Carter ( 1 ) divisible d'une machine fluidique suivant la revendication précédente,
**caractérisé en ce que**
au moins un axe ( 14, 15 ) de rotation des deux axes ( 14, 15 ) de rotation des au moins deux arbres ( 10, 11 ) de pignon est disposé dans le carter ( 1 ) divisible, au dessus d'un axe ( 17 ) de rotation de la grande roue ( 101 ).

5. Carter ( 1 ) divisible d'une machine fluidique suivant au moins l'une des revendications précédentes,
**caractérisé en ce que**
le premier ( 2 ) et le deuxième éléments ( 3 ) de carter sont goujonnés l'un à l'autre et/ou boulonnés l'un à l'autre.

6. Carter ( 1 ) divisible d'une machine fluidique suivant au moins l'une des revendications précédentes,
**caractérisé en ce que**
le carter ( 1 ) divisible a un troisième élément ( 6 ) de carter, qui est relié au premier élément ( 2 ) de carter ou au deuxième élément ( 3 ) de carter par un autre joint ( 7 ) partiel.

7. Carter ( 1 ) divisible d'une machine fluidique suivant la revendication précédente,
**caractérisé en ce que**
l'engrenage ( 100 ) a au moins deux autres arbres ( 20, 21 ) de pignon, engrenant avec la grande roue ( 101 ) ou avec une autre grande roue, la grande roue ( 101 ) ou l'autre grande roue et les au moins deux autres arbres ( 20, 21 ) de pignon étant disposés dans l'autre joint ( 7 ) partiel.

8. Carter ( 1 ) divisible d'une machine fluidique suivant au moins l'une des revendications précédentes,
**caractérisé en ce que**
le premier ( 2 ) et le deuxième éléments ( 3 ) de boîtier sont un châssis de dessus et un couvercle de joint partiel du carter ( 1 ) de l'engrenage et/ou le premier ( 2 ) et le deuxième éléments ( 3 ) de carter sont orientés l'un par rapport à l'autre et/ou centrés par des surfaces ( 9 ) d'appui décalées verticalement l'une par rapport à l'autre d'un gradin ( 8 ) constituant le saut ( 5 ) du joint partiel.

9. Carter ( 1 ) divisible d'une machine fluidique suivant au moins l'une des revendications précédentes,
**caractérisé en ce que**
le joint ( 4 ) partiel est rendu étanche en utilisant une lentille ( 30 ) d'étanchéité disposée au dessus du saut ( 5 ) du joint partiel.

10. Carter ( 1 ) divisible d'une machine fluidique suivant au moins l'une des revendications précédentes,
**caractérisé en ce que**
l'engrenage ( 100 ) est l'engrenage ( 100 ) d'une turbine, d'un turbocompresseur, d'un compresseur à engrenage à plusieurs étages ou d'une pompe.
